# EUROPEAN PATENT SPECIFICATION

(11) **EP 3 038 863 B1**
(45) Date of publication and mention of the grant of the patent: **14.12.2016**
(21) Application number: 14729067.0
(22) Date of filing: 02.05.2014
(51) Int. Cl.: B60R 9/045, B60R 9/042

(54) **AN ARRANGEMENT FOR TRANSPORTING OBJECTS ON THE ROOFTOP OF A VEHICLE**
EINE ANORDNUNG UM GEGENSTÄNDE AUF EIN FAHRZEUGDACH ZU TRANSPORTIEREN
AGENCEMENT POUR TRANSPORTER DES OBJETS SUR LE TOIT D'UN VÉHICULE

(30) Priority: 02.05.2013 NO 20130606
(43) Date of publication of application: 06.07.2016
(73) Proprietor: Easylift AS, 2150 Årnes (NO)
(72) Inventor: MARSTEIN, Bjarne, N-2150 Årnes (NO); SØRLIE, Geir, N-3117 Tønsberg (NO); LUNDBERG, Arnt, N-2150 Årnes (NO)
(74) Representative: Oslo Patentkontor AS
(86) International application number: PCT/NO2014/050071
(87) International publication number: WO 2014/178728

(56) References cited:
- US-A- 5 421 495
- US-A1- 2008 035 688
- US-B1- 6 428 263

## Description

### Field of the Invention

The present invention relates to an arrangement for transporting objects on a car roof. Originally, the invention was devised as a rack for transporting kayaks, but the rack may easily be adapted for transporting other objects on a car roof.

### Background

Currently several types of racks are used for transporting objects on car roofs, such as building articles, ladders, small boats or sporting articles such as bicycles, skis, canoes, kayaks, surfboards, etc.

Kayak enthusiasts often need to transport their vessel by car. Due to the size of the object, this must be done either with a specially designed trailer or on the roof of the car. Private persons will normally opt for transporting the kayak on the roof, and then a solution is needed, i.e. a rack, in order to fasten it securely to the car. It may also be heavy to lift a long kayak onto the roof, and normally two persons are needed for this, especially on a tall car. Previously, there have thus been introduced several specialized kayak racks to ease lifting the kayak onto the roof, which ideally may be performed by a person single-handed.

Currently there are several types of kayak racks available in the trade. The simplest solutions, e.g. Thule 874) consist of a simple cradle mounted onto a roof rack, with straps for fastening the kayak thereto. There are also more advanced solutions (from the English company Kari-Tek) with a frame that is fastened to the roof rack. The kayak is lifted into a cradle mounted on the frame and is fastened there while it is hanging on the side of the car. The frame is thereafter lifted and pushed onto the roof rack. There are also solutions with two arms that are mounted onto the roof rack (from Malone Autoracks, Inc., USA). The kayak is lifted into brackets mounted on the arms, whereupon the kayak is lifted upwards by the arms in several steps, alternately in the bow and stern, until it may be tilted into a cradle mounted onto the car rack. The arms are then removed.

Simple cradles require two persons to lift the kayak. The solution with a separate frame may be heavy to operate single-handed, in particular in the case of a tall SUV. The frame is also quite bulky, and occupies a lot of space on the roof when not in use, and creates large air resistance when the car is in motion. The solution with separate arms is easier to handle, but here you have to store the arms in the car so that they are available whenever the kayak is to be lifted on or off the car. This occupies space in the car.

Similar roof racks are known from US 2002/0117523, US 2008/0035688, US 2006/0196904 and JPH 0976839. US 2002/0117523 shows an arrangement for transporting a vessel on a car roof, said device including a number of roof rack cross bars, brackets to be fastened at the ends of the cross bars and a cradle adapted to the shape of the vessel. The cradle is fastened to the brackets through several pivotable mounting stays. The cradle may thus be swung up onto the roof and down beside the car.

US5421495A describes an arrangement for transporting objects on the rooftop of a car according to the preamble of claim.

### Sum mary of the Invention

Thus, there exists a need for a simplified solution for transporting objects on the rooftop of a car, which is easier to handle and does not demand much space, and which is easy to bring with when not in use.

This is achieved an arrangement as defined in the appended claims.

### Short Description of the Drawings

The invention with its properties and benefits will be closer described in the following with reference to the appended drawings, wherein
Fig. 1 shows the invention in side view, and detail sections,
Fig. 2 is a perspective view of the invention,
Fig. 3a-f shows the invention in use when mounting a kayak on the roof of a car.

### Detailed Description

The invention includes brackets which are either mounted at the ends of the cross bar of a roof rack or are integrated into the cross bar, and cradles which are mounted in the brackets and which are adapted to hold an object to be transported.

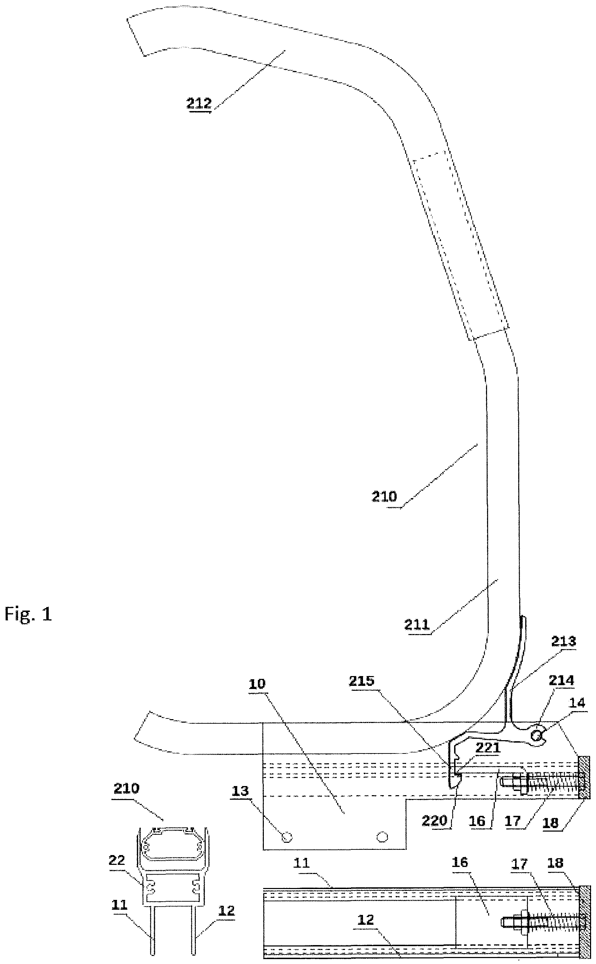

Fig. 1 shows the bracket 10 in side view and in cross section. The bracket includes a square tube 22 with mounting plates 11 , 12. Through each mounting plate there are a number of holes 13 for entering a mounting bolt, which means that the holes of the mounting plates are directly opposite each other. The bracket is intended to be positioned onto a cross bar and clamped to this with bolts through the holes 13. However, the bracket may also be fastened to the bar in other ways, e.g. by being screwed to the bar. The bracket may also be directly integrated into the bar.

Each cradle 210 includes a two part hoop 211, 212 which is fastened to an angular element 213. The angular element has a hinge part in the form of a cylinder 214 with an opening. The opening enables the cradle to be hung onto a hinge pin 14 at the end of the bracket 10. The angular element also includes a locking hook 215. When the cradle is hung onto the hinge pin 14, it may be swung around whereupon the locking hook is entering an opening 15 in the bracket 10 and locking the cradle to the bracket.

The locking arrangement includes a movable plate 16 sliding in slots on each side internally to the bracket. A screw 17 is arranged in one end of the plate 1 6, the screw connecting the plate with a knob 18. A spring 19 is mounted onto the screw between the end of the plate 16 and an end wall in the bracket. The spring will press the plate outwards into the opening 15. When the locking hook 215 is entering the opening 15 it will force the plate 16 backwards. The locking hook has an oblique or rounded edge 220 which enables this action. When the locking hook is pushed further down the plate will pass a straight edge 221 on the locking hook and slide a little backwards. The cradle is then locked to the bracket. In order to release the cradle so it may be swung back, the user has to pull the knob 18 to let the locking hook release the plate.

As mentioned, the cradle includes a two-part hoop. The hoop is composed of two parts 211, 212, which are arranged in such a way that one part slides telescopically inside the other. The width of the hoop or cradle may thus be varied.

The hinging (the cradle may swing about the hinge pin 14) allows the cradle to be tilted downwards at the side of the car. The hoop 210 is designed according to the shape of the object to be transported, e.g. adapted to the bottom of a kayak.

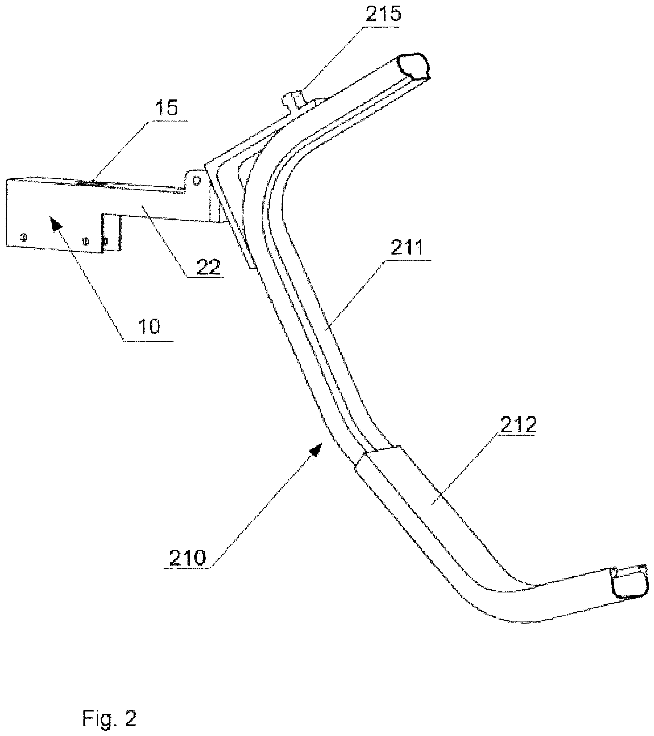

Fig. 2 shows the invention in perspective view. As mentioned, two such arrangements are used mounted on roof racks on the car.

In use, the cradles are swung downwards at the side of the car. The telescopic connection between the hoop parts is then fully extended, and this provides for a comfortable low lifting height, at approximately the height of the user's hip or even lower. The object to be transported may then be lifted into the cradles. Then, the hoops are pushed together in the telescopic connection. The hoop parts may then become locked to each other, with a system of locking hooks etc., and/or straps may be put around the hoops, e.g. between the ends forcing the hoop parts together and locking them in this position (not shown), and then holding the object tightly in the cradle. Thereafter the object is swung onto the roof of the car, by the hoops being swung about the hinge points until the locking hooks are engaged with the brackets.

### Transporting a kayak:

The user grabs the edge of the sitting well and lifts the kayak up to about abdominal height and lays it into the cradles. The sitting well is now facing outwards. The kayak is fastened with straps mounted on the cradles. The user grips the underside of the kayak and swings it onto the roof. The cradles fall against the brackets and become locked. The kayak is now lying very steadily, in a vertical orientation with the sitting well turned towards the roof and ready for transport.

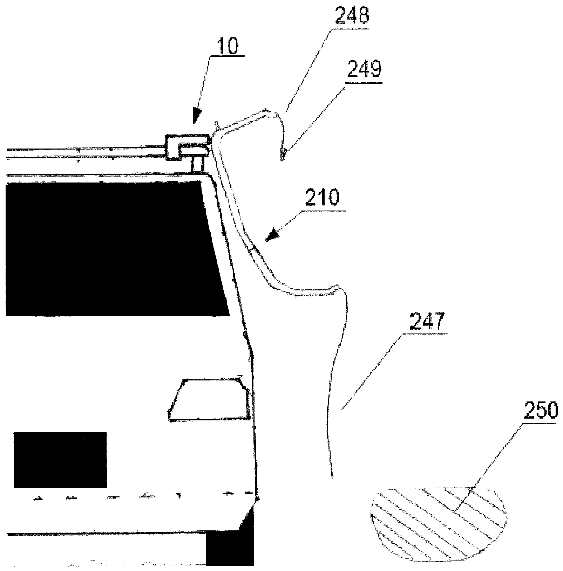

This is illustrated in the sequence in Fig. 3a-f.

Fig. 3a shows the kayak 250 lying on the ground. The brackets 10 are mounted on the roof racks of the car. The cradles 210 are hooked onto the bracket. Each cradle is equipped with straps 247, 248 and lock 249.

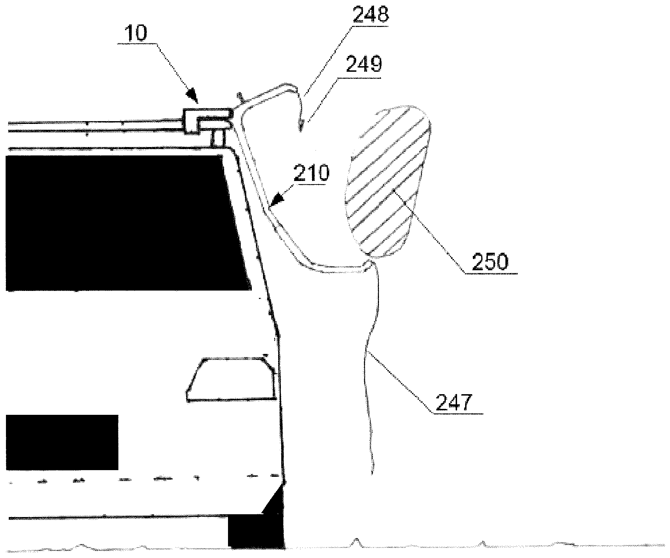

In Fig. 3b the kayak is lifted up into the cradle(s). The cradles are telescopic and shown in an expanded state.

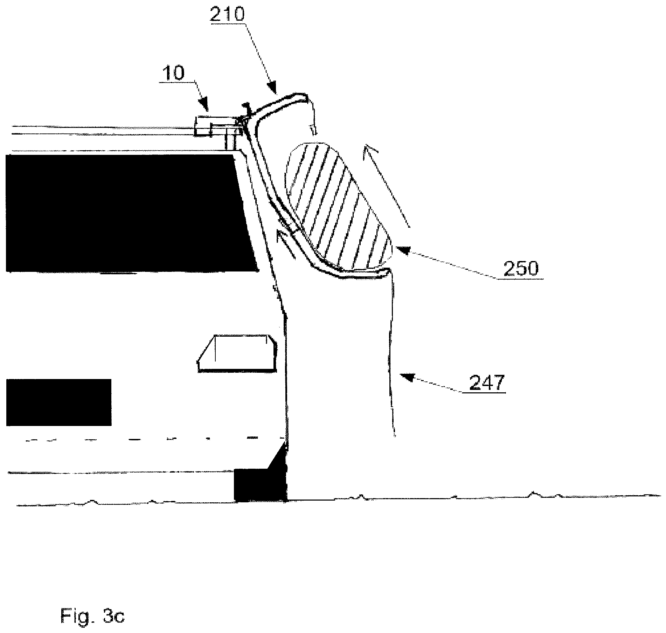

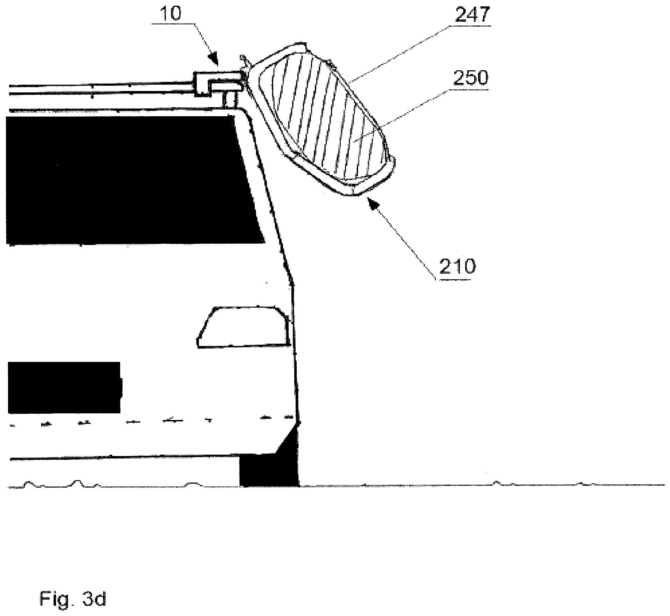

In Fig. 3c the kayak is positioned in the cradles, the cradles are pushed together in the direction of the arrows and the straps are fastened, Fig. 3d.

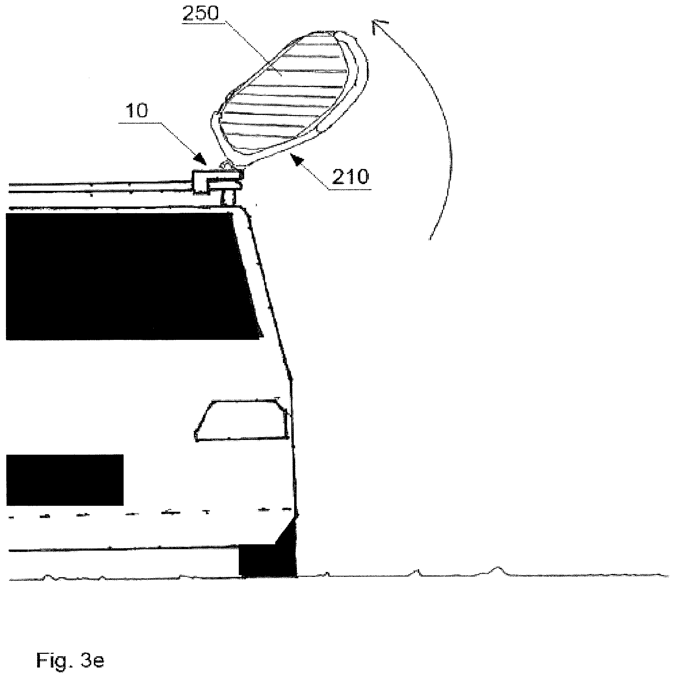

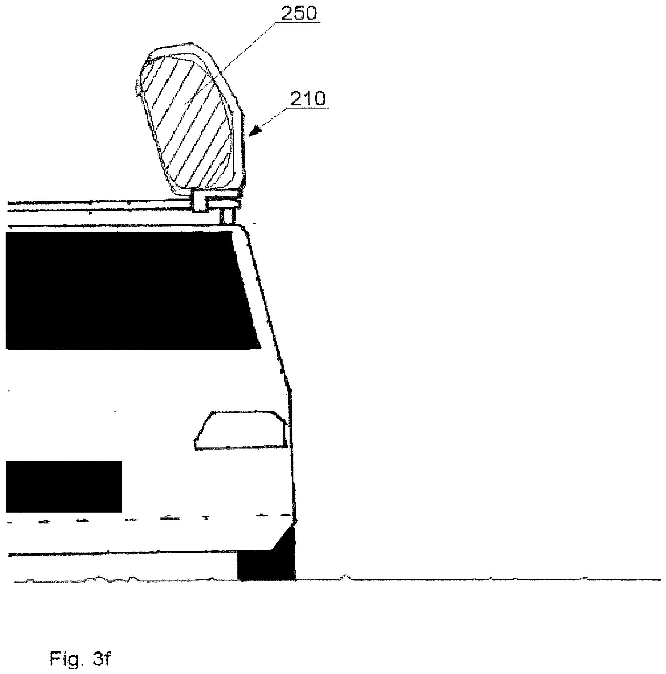

In Fig. 3e the cradles 210 with kayak 250 are swung onto the roof of the car until the cradles are locked in the brackets 10, Fig. 3f. The kayak is then positioned correctly on the car.

The kayak is dismounted by releasing the locking hooks and turning the kayak downwards towards the side of the car. The straps are then released and the kayak lifted onto the ground.

The cradles are easily dismounted from the brackets by turning them into the correct position and pulling out the cradles. Only the brackets remain on the roof racks. If desired these may also easily be removed by releasing the screws.

The bracket may serve several purposes. Apart from holding a kayak cradle, it may hold mounting arrangements for bicycles, surfing boards, skis etc. It may also be used for transporting canoes or any small vessel which has a shape and size enabling it to be transported on the roof of a car.

As an option, the arrangement may also include motorized means for lifting the kayak onto the roof, i.e. an electric motor for turning the cradle. The motor may be a geared rotational motor for turning the cradle about the hinge point, or a linear motor for the same pupose.

## Claims

1. An arrangement for transporting objects on the rooftop of a car, wherein a number of roof racks are mounted onto the car, each roof rack including a cross bar, the arrangement including a bracket (10) mounted on an end of each cross bar, and cradles (210) hinged to the brackets,
**characterized in that**
each bracket (10) includes a tube (22) with a hinge pin (14) at one end thereof and a locking arrangement,
each cradle (21) includes a hoop (211, 212) adapted to the shape of the object to be transported, a pivotable fastening point in the form of a cylinder (214) with an opening, and a locking hook (215),
wherein the cradle is releasable fastened to the bracket (10) by leading the cylinder (214) onto the hinge pin (14), and the cradle may be locked to the bracket by turning the cradle (210) until the locking hook (215) engages the locking arrangement.

2. An arrangement according to claim 1, wherein each hoop includes two parts (211, 212) which are telescopically connected with each other.

3. An arrangement according to claim 1, wherein the locking hook includes an oblique or rounded part (220) and a sharp edge (221), the locking arrangement including an opening (15) in the tube (22) allowing the locking hook (215) to enter the tube, a spring loaded plate (16) which is arranged slideable inside the tube, and a knob (18) allowing the plate to be withdrawn from the locking hook (215) in order to release this.

4. An arrangement according to claim 1, wherein the bracket is integrated in the cross bar.

5. An arrangement according to claim 1, wherein the bracket includes means for mounting it on the cross bar.

6. An arrangement according to claim 5, wherein said means includes two mounting plates (11, 12) adapted to be positioned on opposite sides of the cross bar, each plate including holes (13) for bolts for clamping the bracket to the cross bar.

## Patentansprüche

1. Anordnung um Gegenstände auf einem Fahrzeugdach zu transportieren, wobei eine Anzahl von Dachgepäckträgern an das Fahrzeug montiert sind, wobei jeder Dachgepäckträger eine Querleiste enthält, wobei die Anordnung eine Halterung (10), die an ein Ende einer jeden Querleiste montiert ist, und Aufnahmevorrichtungen (210), die an den Halterungen gelenkig gelagert sind, enthält,
**dadurch gekennzeichnet, dass**
jede Halterung (10) ein Rohr (22) mit einem Gelenkstift (14) an einem Ende desselben und eine Verriegelungsanordnung enthält,
wobei jede Aufnahmevorrichtung (21) einen Spriegel (211, 212), der an die Form des zu transportierenden Gegenstands angepasst ist, einen schwenkbaren Befestigungspunkt in der Form eines Zylinders (214) mit einer Öffnung, und einen Verriegelungshaken (215) enthält,
wobei die Aufnahmevorrichtung lösbar an die Halterung (10) durch Führen des Zylinders (214) an dem Gelenkstift (14) befestigt ist, und wobei die Aufnahmevorrichtung an der Halterung durch Drehen der Aufnahmevorrichtung (210) bis der Verriegelungshaken (215) sich mit der Verriegelungsanordnung im Eingriff befindet, verriegelt werden kann.

2. Anordnung nach Anspruch 1, wobei jeder Spriegel zwei Teile (211, 212) enthält, die teleskopisch miteinander verbunden sind.

3. Anordnung nach Anspruch 1, wobei der Verriegelungshaken ein schräges oder rundes Teil (220) und eine scharfe Kante (221) enthält, wobei die Verriegelungsanordnung eine Öffnung (15) in dem Rohr (22) enthält, um dem Verriegelungshaken (215) zu ermöglichen, in das Rohr einzutreten, eine federbelastete Platte (16), die innerhalb des Rohrs verschiebbar angeordnet ist, und einen Knopf (18), der es der Platte ermöglicht, von dem Verriegelungshaken (215) zurückgezogen zu werden, um dies freizugeben.

4. Anordnung nach Anspruch 1, wobei die Halterung in die Querleiste integriert ist.

5. Anordnung nach Anspruch 1, wobei die Halterung Mittel enthält, um diese an der Querleiste zu befestigen.

6. Anordnung nach Anspruch 5, wobei diese Mittel zwei Montageplatten (11, 12) enthalten, die angepasst sind, an gegenüberliegenden Seiten der Querleiste befestigt zu werden, wobei jede Platte Löcher (13) für Bolzen enthält, um die Halterung an die Seitenleiste zu klemmen.

## Revendications

1. Agencement pour transporter des objets sur le toit d'une voiture, dans lequel un certain nombre de galeries de toit sont montées sur la voiture, chaque galerie de toit comportant une barre transversale, l'agencement comportant un support (10) monté sur une extrémité de chaque barre transversale, et des berceaux (210) articulés aux supports,
**caractérisé en ce que**
chaque support (10) comporte un tube (22) avec un axe d'articulation (14) au niveau d'une des extrémités de celui-ci et un agencement de verrouillage, chaque berceau (21) comporte une frette (211, 212) adaptée à la forme de l'objet à transporter, un point de fixation pouvant pivoter en forme de cylindre (214) avec une ouverture, et un crochet de verrouillage (215),
dans lequel le berceau est fixé détachable au support (10) en menant le cylindre (214) sur l'axe d'articulation (14), et le berceau peut être verrouillé au support en tournant le berceau (210) jusqu'à ce que le crochet de verrouillage (215) enclenche l'agencement de verrouillage.

2. Agencement selon la revendication 1, dans lequel chaque frette comporte deux parties (211, 212) qui sont raccordées de façon télescopique l'une à l'autre.

3. Agencement selon la revendication 1, dans lequel le crochet de verrouillage comporte une partie oblique ou arrondie (220) et un bord pointu (221), l'agencement de verrouillage comportant une ouverture (15) dans le tube (22) permettant au crochet de verrouillage (215) d'entrer dans le tube, une plaque à ressort (16) qui est agencée coulissante à l'intérieur du tube, et un bouton (18) permettant de retirer la plaque du crochet de verrouillage (215) afin de détacher celle-ci.

4. Agencement selon la revendication 1, dans lequel le support est intégré à la barre tra nsversa le.

5. Agencement selon la revendication 1, dans lequel le support comporte un moyen pour son montage sur la barre transversale.

6. Agencement selon la revendication 5, dans lequel ledit moyen comporte deux plaques de montage (11, 12) adaptées pour être positionnées sur des côtés opposés de la barre transversale, chaque plaque comportant des trous (13) pour des boulons afin de serrer le support sur la barre transversale.
